# EUROPEAN PATENT SPECIFICATION

(11) **EP 3 168 621 B1**
(45) Date of publication and mention of the grant of the patent: **22.02.2023**
(21) Application number: 16198470.3
(22) Date of filing: 11.11.2016
(51) Int. Cl.: G01N 35/00, G01N 35/02, G01N 35/10, G01N 35/04

(54) **ANALYZER**
ANALYSATOR
ANALYSEUR

(30) Priority: 13.11.2015 JP 2015223497
(43) Date of publication of application: 17.05.2017
(73) Proprietor: FURUNO ELECTRIC CO., LTD., Nishinomiya-City, Hyogo 662-8580 (JP)
(72) Inventor: KOMATSU, Shinya, Nishinomiya-City, Hyogo 662-8580 (JP)
(74) Representative: Müller Hoffmann & Partner

(56) References cited:
- WO-A1-2008/133019
- US-A1- 2008 099 564

## Description

### Technical Field

This disclosure relates to an analyzer.

### Background of the Invention

Conventionally, analyzers which support a first row of a plurality of containers annularly placed centering on a rotation center, and a second row of a plurality of containers annularly placed concentrically with the first row to surround the first row are known (e.g., JP2002-221525A). In JP2002-221525A, a bar code applied to each container of the second row is read by a bar code reader provided radially outward of the second row. Further a bar code applied to each container of the first row is read by the bar code reader through a gap formed by not disposing a container in the second row.
WO 2008/133 019 A1 discloses an autoanalyzer with a reagent receiving box holding multiple reagent containers. The reagent containers comprise a barcode readable by a barcode reader and are arranged in two carrousels. The bar codes of the containers in the inner carrousel can be read through a gap in the outer carrousel. The barcodes are provided on surfaces of the reagent containers which are tilted at a predetermined angle with respect to the longitudinal direction of the reagent containers.

This kind of analyzer will be more useful to be able to read the bar codes of the containers of the first and second rows more reliably and easily.

### Summary of the Invention

The purpose of this disclosure relates to providing an analyzer which supports a plurality of rows of annularly placed containers, with a structure with which bar codes applied to the containers are read more reliably and easily.

The above-mentioned problem is solved by the subject-matter of the independent claim.
According to one aspect of the present disclosure, an analyzer is provided. The analyzer includes a first rotational support rotatable about a rotation center and configured to support a plurality of first containers annularly placed around the rotation center, a second rotational support rotatable about the rotation center independently from the first rotational support, and configured to support a plurality of second containers placed around the rotation center to surround the first containers, and a reader provided on an opposite side from the first containers with respect to the second containers, configured to emit an emission line in a given direction different from a radially inward direction with respect to the rotation center and optically read a first reading target applied to a first surface of each of the first containers through a gap adjacent to an end of the circumferential row of the plurality of second containers, and a second reading target applied to a second surface of each of the second containers. A first angle between a first normal line direction of the first surface and a radially outward direction with respect to the rotation center is set to be different from a second angle between a second normal line direction of the second surface and the radially outward direction.

### Brief Description of the Drawings

The present disclosure is illustrated by way of example and not by way of limitation in the figures of the accompanying drawings, in which the like reference numerals indicate like elements and in which:
Fig. 1 is a plan view schematically illustrating an example of an analyzer according to one embodiment of this disclosure;
Fig. 2 is a flowchart illustrating an example of an analysis procedure performed by the analyzer according to the embodiment;
Fig. 3 is a plan view schematically illustrating an example of the analyzer according to the embodiment, illustrating a state where a first reading target provided to a first container is read by a reader;
Fig. 4 is a plan view schematically illustrating an example of the analyzer according to the embodiment, illustrating a state where a second reading target provided to a second container is read by the reader;
Fig. 5 is a perspective view schematically illustrating an example of a first holder supporting the first containers used by the analyzer according to the embodiment;
Fig. 6 is another perspective view schematically illustrating the example of the first holder supporting the first containers used by the analyzer according to the embodiment;
Fig. 7 is a plan view schematically illustrating the example of the first holder supporting the first containers used by the analyzer according to the embodiment;
Fig. 8 is a perspective view schematically illustrating an example of a second holder supporting the second containers used by the analyzer according to the embodiment;
Fig. 9 is a perspective view schematically illustrating the example of the second holder supporting the second containers used by the analyzer according to the embodiment;
Fig. 10 is a plan view schematically illustrating the example of the second holder supporting the second containers used by the analyzer according to the embodiment;
Fig. 11 is a plan view illustrating a normal line direction of a first surface, a normal line direction of a second surface, radial directions from a rotation center, and an emitting direction of an emission line from a reader in an analyzer of a comparative example; and
Fig. 12 is a plan view illustrating a normal line direction of a first surface, a normal line direction of a second surface, radial directions from a rotation center, and an emitting direction of an emission line from a reader in an analyzer of another example useful for understanding the invention.

### Detailed Description of the Invention

Hereinafter, illustrative embodiments of this disclosure are described. Configurations and controls of the embodiments described below, and operations and results (effects) which are derivable from the configurations and controls are merely examples. This disclosure is implementable also by other than the configurations and controls disclosed in the embodiments described below, and obtainable of various effects with the basic configuration and control thereof.

### <Overall Configuration>

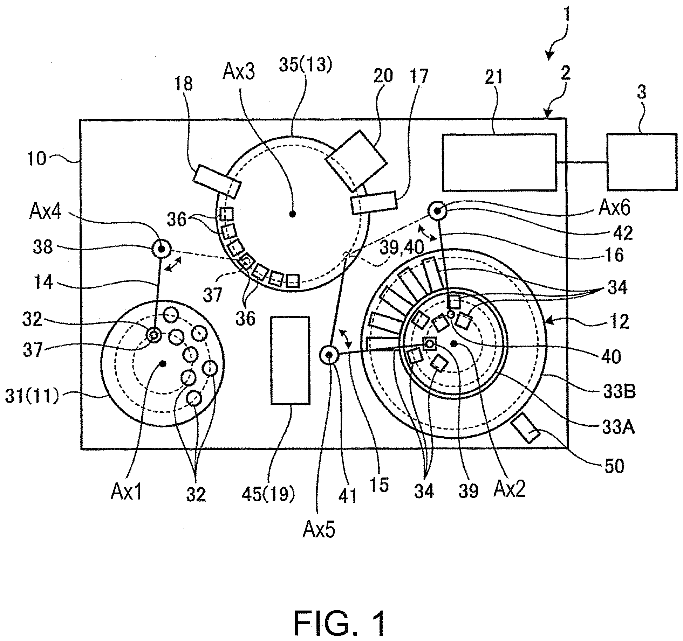

As illustrated in Fig. 1, a biochemical analyzer 1 includes a specimen processing apparatus 2 and an information processing apparatus 3. The specimen processing apparatus 2 obtains reaction liquid by causing reaction between a specimen (serum, blood plasma, urine etc.) and a reagent, and measures light absorbance of the reaction liquid. The information processing apparatus 3 obtains an amount of component of the specimen, such as cholesterol, based on the measured light absorbance by the specimen processing apparatus 2. In other words, the biochemical analyzer 1 analyzes the specimen by a colorimetric method. This kind of biochemical analyzer 1 is used, for example, for examination of the specimen for various examination items, such as a cholesterol value. The biochemical analyzer 1 is one example of the analyzer of this disclosure.

The information processing apparatus 3 includes a controller, a memory, a display unit, and a user-interface (neither of them illustrated). The controller has a CPU (Central Processing Unit), a ROM (Read Only Memory), and a RAM (Random Access Memory). The information processing apparatus 3 is communicable with the specimen processing apparatus 2. The information processing apparatus 3 may be comprised of a personal computer.

The specimen processing apparatus 2 includes a casing 10, a specimen storage 11, a reagent storage 12, a reaction tank 13, a specimen dispenser 14, reagent dispensers 15 and 16, stirrers 17 and 18, a measurer 19, a cleanser 20, and a controller 21.

The specimen storage 11 has a substantially-circular rotor body 31 in plan view. The rotor body 31 is supported by the casing 10 to be rotatable by a drive mechanism (not illustrated) about a rotational axis Ax1 extending in up-and-down directions of the casing 10. The rotor body 31 is capable of supporting a plurality of specimen containers 32. The plurality of specimen containers 32 are set on the rotor body 31, placed around the rotational axis Ax1 so as to integrally rotate with the rotor body 31. Note that, Fig. 1 illustrates some (not all) of the plurality of specimen containers 32. Further the specimen storage 11 may have a plurality of rotational supports which are capable of rotating about the rotational axis Ax1 independently from each other.

Each specimen container 32 contains a specimen. Further the specimen container 32 is applied with a bar code (not illustrated) containing identification information of the specimen container 32, and this bar code is read by a bar code reader (not illustrated) provided at a position inside the specimen storage 11 facing the specimen container 32.

The reagent storage 12 has two rotational supports 33A and 33B independently rotatable about a rotational axis Ax2 (rotation center) by drive mechanisms (not illustrated). Each drive mechanism includes a rotational source (motor etc.) and a rotation transmission mechanism (gear, belt, pulley etc.). The drive source of the drive mechanism may be shared between the two rotational supports 33A and 33B or provided to each of the rotational supports 33A and 33B.

The rotational support 33A supports a plurality of reagent containers 34A annularly placed around the rotational axis Ax2. The rotational support 33B supports a plurality of reagent containers 34B annularly placed around the rotational axis Ax2. The reagent containers 34B are placed to surround the reagent containers 34A. The reagent container 34A and 34B contain reagents. The rotational support 33A is one example of the first rotational support of this disclosure, and the rotational support 33B is one example of the second rotational support of this disclosure. The reagent container 34A is one example of the first container of this disclosure, and the reagent container 34B is one example of the second container of this disclosure.

Bar codes (not illustrated) which identify the reagents contained in the reagent containers 34A and 34B are applied on a radially outward side of surfaces of the reagent containers 34A and 34B. The bar code is read by a bar code reader 50 located on a side of the row of the reagent containers 34B opposite from the row of the reagent containers 34A, in other words, located radially outward of the rotational supports 33A and 33B with respect to the rotational axis Ax2. The bar code reader 50 is one example of the reader of this disclosure.

The reaction tank 13 has a substantially-circular rotor body 35 in plan view. The rotor body 35 is supported by the casing 10 to be rotatable by a drive mechanism (not illustrated) about a rotational axis Ax3 extending in the up-and-down directions of the casing 10. The rotor body 35 is provided with a plurality of light-transparent reaction containers 36. The plurality of reaction containers 36 are placed around the rotational axis Ax3 in the rotor body 35 so as to integrally rotate with the rotor body 35. Note that, Fig. 1 illustrates some (not all) of the plurality of reaction containers 36. Each reaction container 36 may be structured as a cuvette. The specimen and reagent are dispensed into the reaction container 36 and react with each other within the reaction container 36 to become reaction liquid. The reaction tank 13 is kept at a temperature suitable for stimulating the reaction between the specimen and the reagent.

The specimen dispenser 14 has a pipette 37 and a drive mechanism 38. The pipette 37 is rotated by the drive mechanism 38 about a rotational axis Ax4 extending in the up-and-down directions of the casing 10, between a position above the specimen storage 11 and a position above the reaction tank 13. Further the pipette 37 is moved in the up-and-down directions of the casing 10 by the drive mechanism 38. The pipette 37 is connected with a suction-discharge mechanism configured to perform suction and discharge of the specimen. The specimen dispenser 14 sucks the specimen from the specimen container 32 by the pipette 37 inserted into the specimen container 32, then inserts the pipette 37 into the reaction container 36, and discharges (dispenses) the specimen into the reaction container 36 from the pipette 37.

The reagent dispensers 15 and 16 have pipettes 39 and 40 and drive mechanisms 41 and 42, respectively. The pipettes 39 and 40 are rotated by the drive mechanisms 41 and 42 about rotational axes Ax5 and Ax6 extending in the up-and-down directions of the casing 10, respectively, between a position above the reagent storage 12 and a position above the reaction tank 13. Further the pipettes 39 and 40 are moved in the up-and-down directions of the casing 10 by the drive mechanisms 41 and 42, respectively. Moreover the pipettes 39 and 40 are connected with suction-discharge mechanisms configured to perform suction and discharge of the reagents. The reagent dispensers 15 and 16 suck the reagents from the reagent containers 34 by the pipettes 39 and 40 inserted into the reagent containers 34, then insert the pipettes 39 and 40 into the reaction containers 36, and discharge (dispense) the reagents into the reaction containers 36 from the pipettes 39 and 40, respectively.

The measurer 19 includes a light source 45 and a light receiver (not illustrated). The light source 45 is located outside the reaction tank 13, and emits light (e.g., halogen light) toward the reaction container 36. The light receiver receives light penetrated the reaction container 36 and measures the intensity of the received light. The measurer 19 obtains the light absorbance of the reaction liquid inside the reaction container 36 based on the intensity of light measured by the light receiver. The light source 45 is capable of switching a wavelength of light emitted. Thus, the measurer 19 is capable of measuring light absorbances by using a plurality of kinds of light with different wavelengths.

Each of the stirrers 17 and 18 has a stirring member (not illustrated) configured to be inserted into the reaction container 36. The stirrers 17 and 18 stir the specimen and the reagent dispensed into the reaction containers 36 by rotating the stirring members inserted into the reaction containers 36.

The cleanser 20 removes (discards) the reaction liquid from the reaction container 36 and cleanses inside the reaction container 36.

The controller 21 has a CPU, a ROM and a RAM. The controller 21 executes various operations and controls of various parts of the specimen processing apparatus 2.

The specimen processing apparatus 2 having the above configuration performs measurement processing. During the measurement processing, the specimen storage 11, the reagent storage 12, and the reaction tank 13 are moved (to be more specific, rotational members thereof described later in detail rotate) to given positions where they receive the treatments of the reagent dispensing parts 15 and 16, the stirrers 17 and 18, the measurer 19, and the cleanser 20.

### <Processing Procedure>

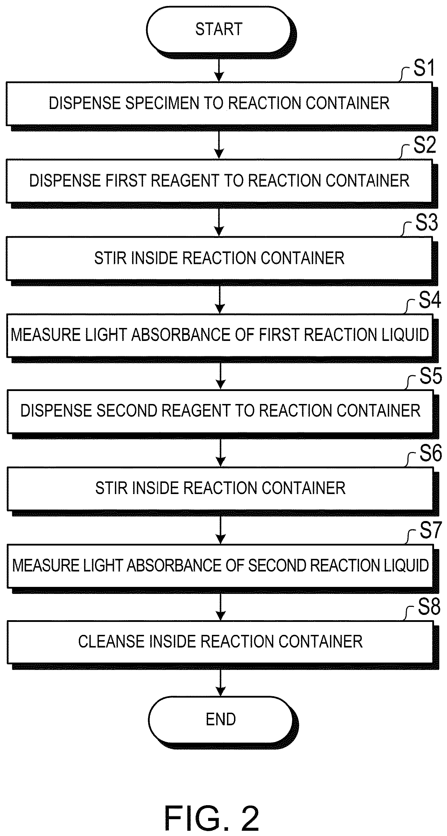

As illustrated in Fig. 2, in the measurement processing, the specimen dispenser 14 dispenses a given specimen inside the specimen storage 11 to a given reaction container 36 of the reaction tank 13 (S1). The reagent dispenser 15 dispenses a first reagent inside the reagent storage 12 corresponding to a given examination item, into the given reaction container 36 (S2). The stirrer 17 stirs inside the given reaction container 36 (S3). After a given period of time from the stirring, the measurer 19 measures the light absorbance of a first reaction liquid obtained from reaction between the given specimen and the first reagent inside the given reaction container 36 (S4). The measured light absorbance is transmitted to the information processing apparatus 3.

Then the reagent dispenser 16 dispenses a second reagent inside the reagent storage 12 corresponding to the given examination item, into the given reaction container 36 (S5). The stirrer 18 stirs inside the given reaction container 36 (S6). After a given period of time from the stirring, the measurer 19 measures the light absorbance of a second reaction liquid obtained from reaction between the first reaction liquid (specimen and first reagent) and the second reagent inside the given reaction container 36 (S7). The measured light absorbance is transmitted to the information processing apparatus 3. Then the cleanser 20 removes the second reaction liquid inside the given reaction container 36 and cleanses inside the reaction container 36 (S8). Once the two light absorbances are obtained by such measurement processing, the information processing apparatus 3 obtains an amount of component of the specimen (e.g., cholesterol value) based on the light absorbances. Note that the processes of S1 to S8 are repeated for every specimen and examination item. Each of the pipettes 37, 39 and 40 is cleansed by a cleanser (not illustrated) at a given timing.

### <Reagent Storage>

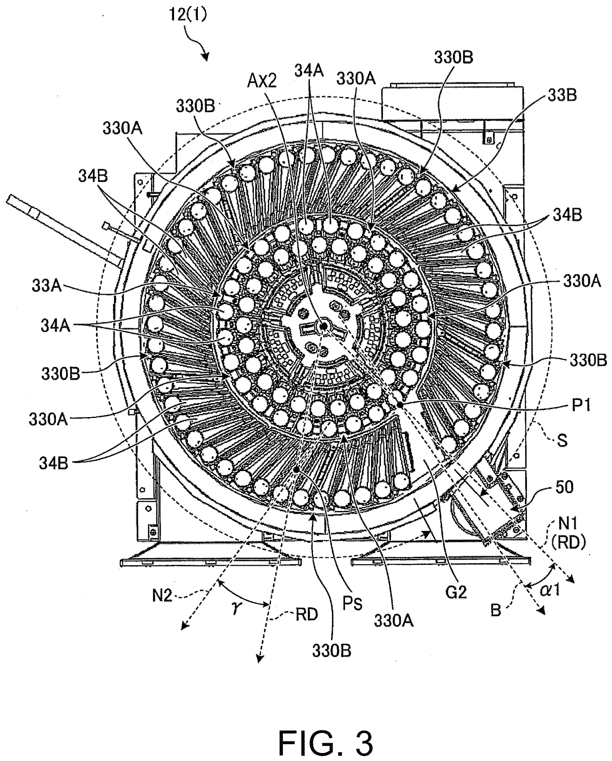

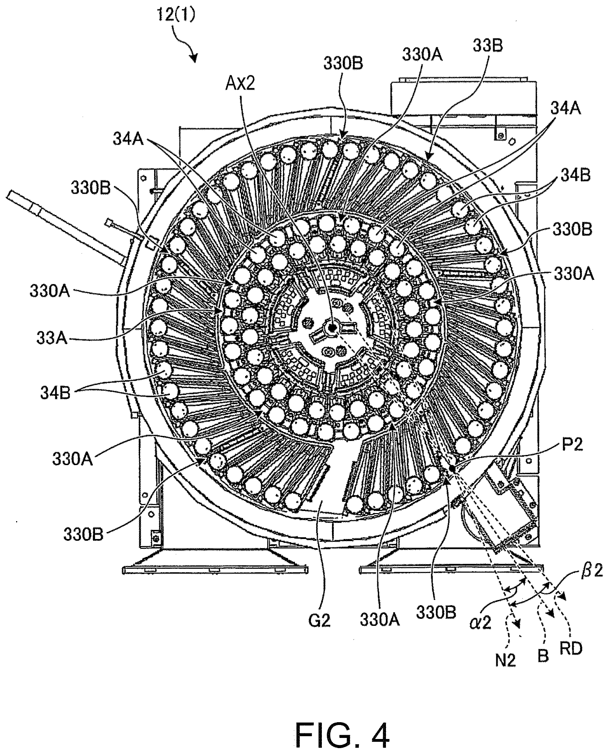

Figs. 3 and 4 are plan views of the reagent storage 12. As described above, the reagent storage 12 includes the inner rotational support 33A closer to the rotational axis Ax2 and the outer rotational support 33B farther from the rotational axis Ax2, which are capable of rotating independently about the rotational axis Ax2.

### <Inner Rotational Support>

As illustrated in Figs. 3 and 4, the inner rotational support 33A supports two rows of reagent containers 34A annularly placed around the rotational axis Ax2 at different radial positions. On the rotational support 33A, in each of the inner row of the plurality of reagent containers 34A closer to the rotational axis Ax2 and the outer row of the plurality of reagent containers 34A farther from the rotational axis Ax2, the reagent containers 34A are placed circumferentially over the entire circumference at a given interval, i.e., even pitch.

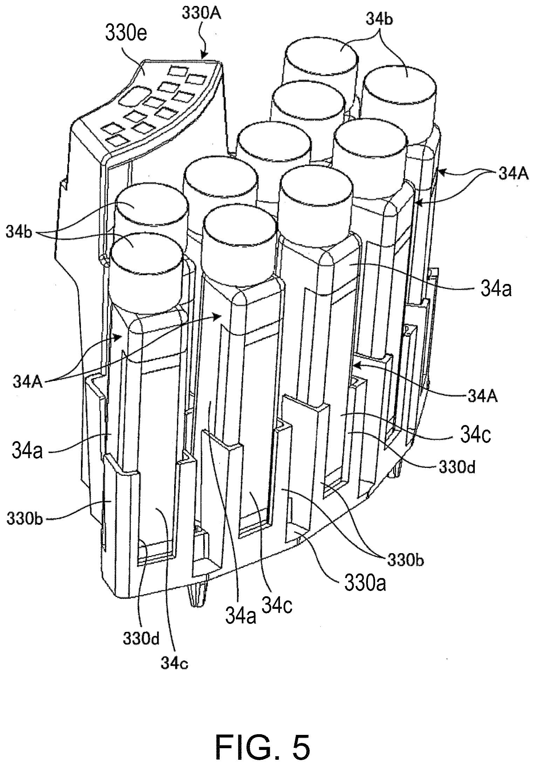

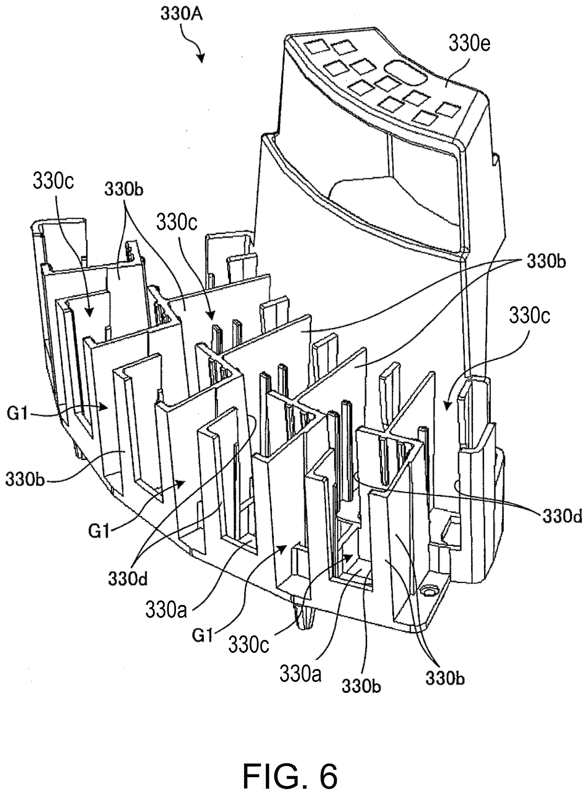

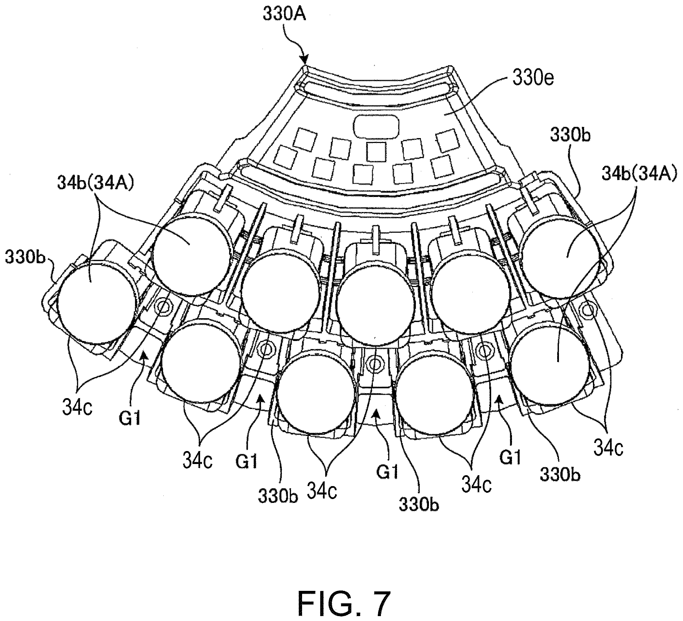

Fig. 5 is a perspective view of a holder 330A supporting the reagent containers 34A. Fig. 6 is a perspective view of the holder 330A. Fig. 7 is a plan view of the holder 330A supporting the reagent containers 34A. The holder 330A illustrated in Figs. 5 to 7 are capable of supporting the plurality of (total of ten, in this embodiment) reagent containers 34A. The holder 330A has lower walls 330a and side walls 330b. Each reagent container 34A is accommodated in an accommodation section 330c formed by the walls 330a and 330b. The wall 330a supports the reagent container 34A from below. The wall 330b prevents the reagent container 34A from moving in sideways or falling over. The wall 330a is a positioning part configured to position the reagent container 34A in the directions of (parallel to) the rotational axis Ax2 (axial directions), and the wall 330b is a positioning part configured to position the reagent container 34A in the radial and circumferential directions with respect to the rotational axis Ax2.

As illustrated in Figs. 5 and 7, the reagent container 34A is formed into a substantially trapezoid column. A container part 34a of the reagent container 34A has walls with substantially even thickness to form a space therein. The reagent is contained within this space. Since the container part 34a has the trapezoid column shape, it is prevented that the supported posture of the reagent container 34A by the holder 330A varies. A detachable cap 34b is provided to an upper end portion of the container part 34a. Note that, the cap 34b is removed when in use of the container.

The reagent container 34A has a surface 34c which faces circumferentially outward when supported by the holder 330A. The surface 34c has a rectangular shape long in the up-and-down directions, i.e., the directions of the rotational axis Ax2. Further the surface 34c is applied with the bar code (not illustrated) by being adhered a printed seal or directly printed the code thereon. An open section 330d is formed at the outer circumferential side of the wall 330b of the holder 330A, for the bar code reader 50 provided on the outer circumferential side optically to read the bar code applied to the surface 34c. For example, the open section 330d is a rectangular slit extending downward from an upper end of the wall 330b. The open section 330d may be a through hole. An emission line from a light transmitter (light emitter), which is not illustrated, of the bar code reader 50 contacts the surface 34c through the open section 330d, reflects thereon and diffuses. The reflected and diffused light enters a light receiver (not illustrated) of the bar code reader 50 through the open section 330d. The surface 34c of the reagent container 34A is one example of the first surface of this disclosure.

As illustrated in Fig. 7, in the rows of the reagent containers 34A placed circumferentially with respect to the rotational axis Ax2, the reagent containers 34A are alternately placed in the circumferential directions. The surface 34c of each reagent container 34A in the row closer to the rotational axis Ax2, i.e., in the upper row in Fig. 7, faces radially outward via a gap G1 between the reagent containers 34A in the row farther from the rotational axis Ax2, i.e., in the lower row in Fig. 7. Therefore, the emission line from the light transmitter of the bar code reader 50 contacts the surface 34c of the reagent container 34A in the closer row to the rotational axis Ax2, via the gap G1 and the open section 330d. The light reflected and diffused on the surface 34c enters the light receiver of the bar code reader 50 via the gap G1 and the open section 330d.

The emission line from the bar code reader 50 is in the form of a line when seen in the directions of the rotational axis Ax2. The bar code reader 50 scans the emission line in the axial directions.

The rotational support 33A is structured so that the surfaces 34c of all the reagent containers 34A supported via the holders 330A face radially outward with respect to the rotational axis Ax2. For example, as illustrated in Fig. 3, in this embodiment, the rotational support 33A is structured so that a normal line direction N1 of the surface 34c coincides with a radially outward direction RD in terms of all the reagent containers 34A supported by the rotational support 33A. Thus, an angle between the normal line direction N1 of the surface 34c and an opposite direction from an emitting direction of the bar code reader 50 (hereinafter, referred to as "the light receiving direction B") becomes a constant value α1 in terms of all the reagent containers 34A.

The rotational support 33A supports the reagent containers 34A via a plurality of holders 330A with the same structure. In this embodiment, for example, the rotational support 33A supports five holders 330A. Thus, the holder 330A enables a replacing operation of the reagent containers 34A on the rotational support 33A by a unit of ten containers which is one-fifth of all fifty reagent containers 34A. The holder 330A is provided with a handle 330e which an operator can hold by hand or finger.

### <Outer Rotational Support>

As illustrated in Figs. 3 and 4, the outer rotational support 33B supports a single row of the reagent containers 34B annularly placed around the rotational axis Ax2. On the rotational support 33B, a single gap G2 is formed adjacent to an end of the row. Therefore, a supporting section defined by removing the gap G2 from the entire circumference around the rotational axis Ax2 is a supporting section S of the rotational support 33B. On the rotational support 33B, the plurality of reagent containers 34B are placed circumferentially over the supporting section S at a given interval, i.e., even pitch. The gap G2 is adjacent to one or two ends of the row of the reagent containers 34B.

The emission line toward the surface 34c of the reagent container 34A and a reflection light from the surface 34c pass through the gap G2.

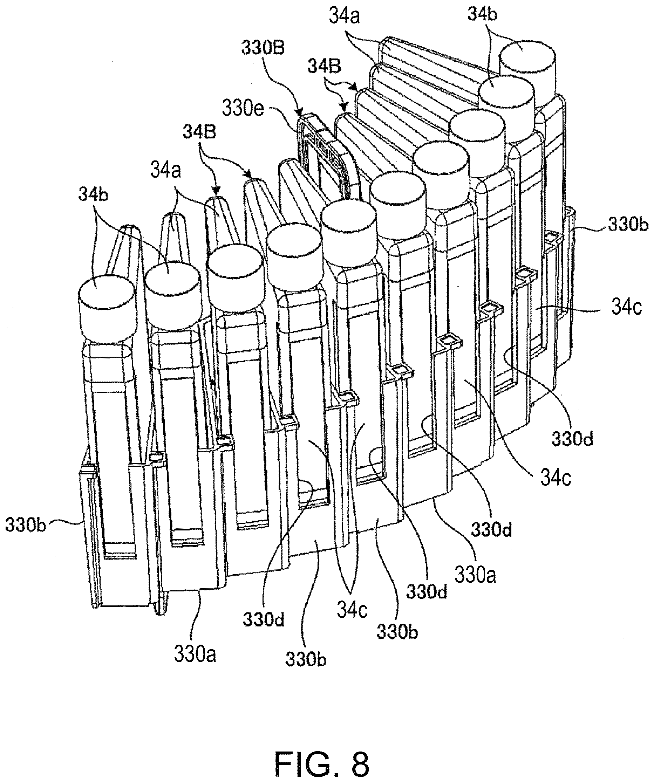

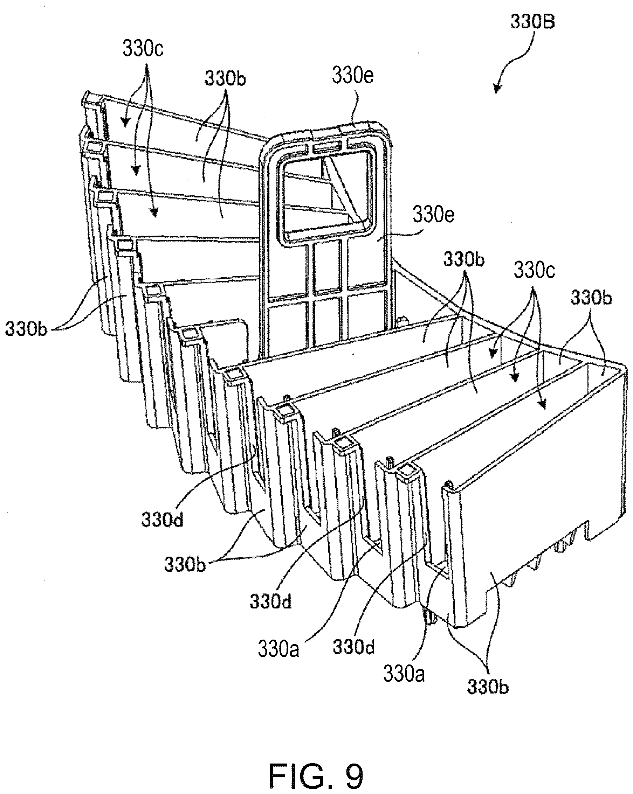

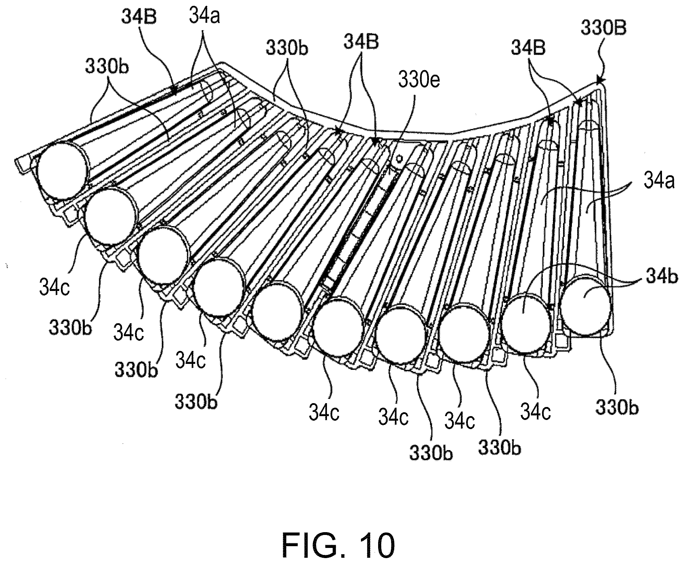

Fig. 8 is a perspective view of the holder 330B supporting the reagent containers 34B. Fig. 9 is a perspective view of the holder 330B. Fig. 10 is a plan view of the holder 330B supporting the reagent containers 34B. The holder 330B illustrated in Figs. 8 to 10 are capable of supporting the plurality of (total often, in this embodiment) reagent containers 34. The holder 330B has lower walls 330a and side walls 330b. Each reagent container 34B is accommodated in an accommodation section 330c formed by the walls 330a and 330b. The wall 330a supports the reagent container 34A from below. The wall 330b prevents the reagent container 34B from moving in sideways or falling over. The wall 330a is a positioning part for the reagent container 34B in the directions of the rotational axis Ax2 (axial directions), and the wall 330b is a positioning part for the reagent container 34B in the radial and circumferential directions with respect to the rotational axis Ax2.

As illustrated in Figs. 8 and 10, the reagent container 34B is formed into a substantially triangular column tapered radially inwardly. The container part 34a of the reagent container 34B has walls with substantially even thickness to form a space therein. The reagent is contained within this space. Since the container part 34a has the triangular column shape, it is prevented that the supported posture of the reagent container 34B by the holder 330B varies. A detachable cap 34b is provided to an upper end portion of the container part 34a. Note that, the cap 34b is removed when in use.

The reagent container 34B has a surface 34c which faces circumferentially outward when supported by the holder 330B. The surface 34c has a rectangular shape long in the up-and-down directions, i.e., the directions of the rotational axis Ax2. Further the surface 34c is applied with the bar code. An open section 330d is formed at the outer circumferential side of the wall 330b of the holder 330B, so that the bar code reader 50 provided on the outer circumferential side optically reads the bar code applied to the surface 34c. For example, the open section 330d is a rectangular slit extending downward from an upper end of the wall 330b. The open section 330d may be a through hole. An emission line from a light transmitter (light emitter), which is not illustrated, of the bar code reader 50 contacts the surface 34c through the open section 330d, reflects thereon and diffuses. The reflected and diffused light enters the light receiver (not illustrated) of the bar code reader 50 through the open section 330d. The surface 34c of the reagent container 34B is one example of the second surface of this disclosure.

The rotational support 33B is structured so that the surfaces 34c of all the reagent containers 34B supported via the holders 330B face radially outward. For example, as illustrated in Fig. 4, in this embodiment, the rotational support 33B is structured so that an angle between a normal line direction N2 of the surface 34c and a radially outward direction RD becomes a constant value β2 in terms of all the reagent containers 34B supported by the rotational support 33B. Thus, an angle between the normal line direction N2 of the surface 34c and the light receiving direction B of the bar code reader 50 becomes a constant value α2 in terms of all the reagent containers 34B.

The rotational support 33B supports the reagent containers 34B via a plurality of holders 330B with the same structure. In this embodiment, for example, the rotational support 33B supports five holders 330B. Thus, the holder 330B enables a replacing operation of the reagent containers 34B on the rotational support 33B by a unit of ten containers which is one-fifth of all fifty reagent containers 34B. The holder 33B is provided with a handle 330e which the operator can hold by hand or finger.

### <Direction Setting>

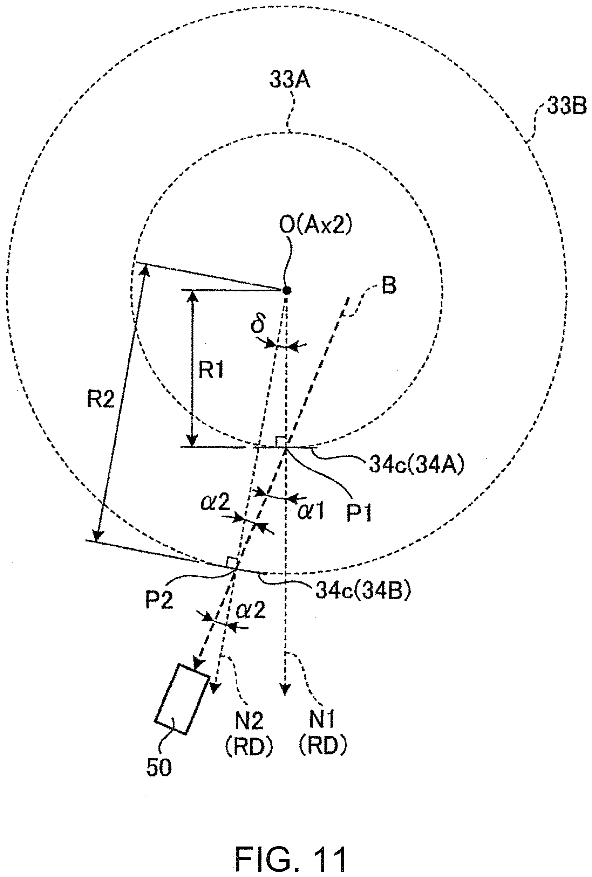

The present inventor found that with the structure as illustrated in Fig. 11 in which the normal line direction N1 of the surface 34c of each reagent container 34A supported by the inner rotational support 33A coincides with the radially outward direction RD, and the normal line direction N2 of the surface 34c of each reagent container 34B supported by the outer rotational support 33B coincides with the radially outward direction RD, the setting of the emitting direction of the emission line from the bar code reader 50 may become difficult. For example, in a case where the light receiving direction B (emitting direction) of the bar code reader 50 cannot be set as the normal line direction of the surface 34c, when seen in the directions of the rotational axis Ax2, at an inner reading position P1, if the angle between the light receiving direction B of the bar code reader 50 and the normal line direction N1 of the surface 34c of the inner reagent container 34A is set to the angle α1 with which the reading by the bar code reader 50 is possible, the angle between the light receiving direction B and the normal line direction N2 of the surface 34c of outer reagent container 34B becomes the angle α2 (=α1-δ) smaller than the angle α1 based on the exterior angle theorem of a triangle with vertices O, P1 and P2 (reading positions). Here, "δ" is an angular difference between the reading positions P1 and P2 of the surfaces 34c of the reagent containers 34A and 34B. The angular difference δ becomes larger as a difference between a radius R1 of the reading position P1 and a radius R2 of the reading position P2 is larger. Therefore, depending on the specifications of various parts, the angle α2 at the outer reading position P2 may be an angle with which the reading by the bar code reader 50 is not possible. Conversely, at the outer reading position P2, if the angle α2 is set to an angle with which the reading by the bar code reader 50 is possible, the angle α1 at the inner reading position P1 may be an angle with which the reading by the bar code reader 50 is not possible.

Therefore, through his extensive research, the inventor found, as illustrated in Figs. 3 and 4, that when seen in the axial directions, if the emitting direction of the emission line from the bar code reader 50 is different from a radially inward direction, i.e., the light receiving direction B of the bar code reader 50 is different from the radially outward direction RD, by setting an angle β1 (=0, not illustrated) between the normal line direction N1 of the surface 34c and the radially outward direction RD at the reading position P1 and an angle β2 between the normal line direction N2 of the surface 34c and the radially outward direction RD at the reading position P2 to be different from each other, the following becomes possible. That is, at the reading positions P1 and P2, it becomes possible to set the angles between the light receiving direction B (emitting direction) and the normal line directions N1 and N2 to the angles α1 and α2 with which the reading by the bar code reader 50 is possible. Note that the settings of the directions and angles are not limited to those illustrated in Figs. 3 and 4, respectively.

In the example of Figs. 3 and 4, the angle β2 is set larger than 0. Further, each reagent container 34B is supported by the rotational support 33B in a posture so that it extends in the normal line direction N2. In this posture, when seen in the axial directions, the reagent container 34B extends in a direction intersecting with the radial direction and a direction perpendicular to the radial direction at a supported position Ps of the reagent container 34B. The supported position Ps is referred to as a reference position or a representative position, and is, for example, a gravity center position, or a geometrical gravity or center position or a center position taken when seen in the axial directions. In the supported state at the supported position Ps, the reagent container 34B has a substantially triangular column shape tapered toward the rotational axis Ax2. Therefore, as illustrated in Fig. 3, it is possible to place the plurality of reagent containers 34B closely to each other on the rotational support 33B, in the posture in which each of them extends in the direction intersecting with one of the radial directions and the direction perpendicular to the radial direction at the supported position Ps and an angle γ between the normal line direction N2 and the radial direction becomes the same for the reagent containers 34B. Further, since the plurality of reagent containers 34B are placed in such a posture, the diameter of the rotational support 33B is smaller than the case where the plurality of reagent containers 34B are placed radially. In other words, there is an advantage that the comparatively-large-volume reagent containers 34B fit into the comparatively-small rotational support 33B. Each reagent container 34B is line symmetric with respect to the normal line direction N2 when seen in the axial directions, and is plane-symmetric with respect to a plane extending in the normal line direction N2. Thus, it is easier to handle the reagent containers 34B. Note that as illustrated in Figs. 3 and 4, the plurality of containers 34B are arranged in a spiral shape.

As described above, according to this embodiment, the angle β1 (=0, first angle, not illustrated) between the normal line direction N1 (first normal line direction) of the surfaces 34c (first surface) of the reagent container 34A (first container) and the radially outward direction RD with respect to the rotational axis Ax2 is different from the angle β2 (second angle) between the normal line direction N2 (second normal line direction) of the surface 34c (second surface) of the reagent container 34B (second container) and the radially outward direction RD. Thus, according to this embodiment, for example, the bar codes (first reading target and second reading target) at the reading positions P1 and P2 of the reagent containers 34A and 34B are read more reliably and accurately by the bar code reader 50.

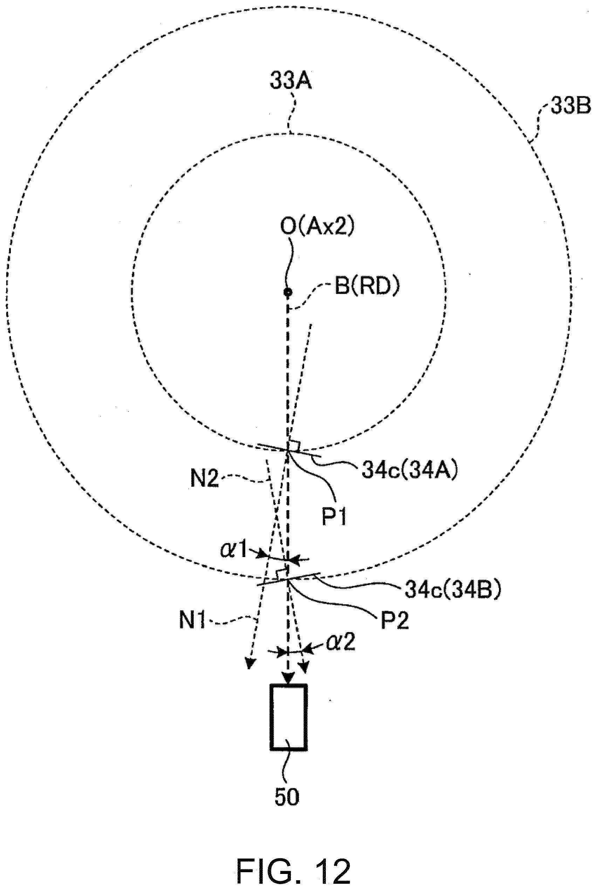

In another embodiment, as illustrated in Fig. 12, in a case where the emitting direction of the emission line is set to a radially inward direction, i.e., the light receiving direction B of the bar code reader 50 is set to a radially outward direction RD, even if each of the normal line direction N1 (first normal line direction) of the surface 34c of the reagent container 34A (first container) and the normal line direction N2 (second normal line direction) of the surface 34c of the reagent container 34B (second container) forms an angle larger than 0° with the radially outward direction RD, similar effects to the above embodiment are obtained. Note that in this case, the angles α1 and α2 may be the same or different.

Although the embodiments of this disclosure are described above, the embodiment described above are merely an example and is not intended to limit the scope of this disclosure.

## Claims

1. An analyzer (1), comprising:
a plurality of first containers (34A) and a plurality of second containers (34B);
a first rotational support (33A) rotatable about a rotation center (Ax2) and supporting the plurality of first containers (34A) annularly placed around the rotation center (Ax2);
a second rotational support (33B) rotatable about the rotation center (Ax2) independently from the first rotational support (33A), and supporting the plurality of second containers (34B) placed around the rotation center (Ax2) to surround the first containers (34A), wherein a radius of the first rotational support (33A) is smaller than a radius of the second rotational support (33B); and
a reader (50) provided radially outward of the rotational supports (33A, 33B) with respect to the rotation center (Ax2), configured to emit an emission line in a given direction (B) different from a radially inward direction with respect to the rotation center (Ax2) and optically read a first reading target applied to a first surface (34c) of each of the first containers (34A) positioned at first reading positions (P1) through a gap (G2) within a circumferential row of the plurality of second containers (34B), and a second reading target (P2) applied to a second surface (34c) of each of the second containers (34B) positioned at second reading positions (P2),
wherein a first angle (β1) between a first normal line direction (N1) of the first surface (34c) at the first reading position (P1) and a radially outward direction (RD) with respect to the rotation center (Ax2) is set to be different from a second angle (β2) between a second normal line direction (N2) of the second surface (34c) at the second reading position (P2) and the radially outward direction (RD),
such that at the reading positions (P1) and (P2), a respective first angle (α1) and a second angle (α2) between the direction (B) and the respective normal line directions (N1) and (N2) are such that optical reading of the respective first and second reading targets applied to the respective first and second surfaces (34c) by the reader (50) is possible.

2. The analyzer (1) of claim 1, wherein the second container (34B) has a shape tapered toward the rotation center (Ax2).

3. The analyzer (1) of any one of claims 1 or 2, wherein the second rotational support (33B) supports the second containers (34B) via a plurality of holders (330B) having the same shape as each other and capable of supporting the second containers (34B), in a supporting section (S) extending circumferentially.

## Patentansprüche

1. Analysator (1), aufweisend:
eine Vielzahl erster Behälter (34A) und eine Vielzahl zweiter Behälter (34B);
einen ersten Drehträger (33A), der um ein Drehzentrum (Ax2) drehbar ist und die Vielzahl erster Behälter (34A) trägt, die um das Drehzentrum (Ax2) ringförmig platziert sind;
einen zweiten Drehträger (33B), der unabhängig vom ersten Drehträger (33A) um das Drehzentrum (Ax2) drehbar ist und die Vielzahl zweiter Behälter (34B) trägt, die um das Drehzentrum (Ax2) so platziert sind, dass sie die ersten Behälter (34A) umgeben, wobei ein Radius des ersten Drehträgers (33A) kleiner ist als ein Radius des zweiten Drehträgers (33B);
ein Lesegerät (50), das radial außerhalb der Drehträger (33A, 33B) in Bezug auf das Drehzentrum (Ax2) vorgesehen ist, dafür konfiguriert ist, eine Emissionslinie in einer gegebenen Richtung (B) zu emittieren, die sich von einer radial nach innen weisenden Richtung in Bezug auf das Drehzentrum (Ax2) unterscheidet, und ein erstes Leseziel, das auf eine erste Oberfläche (34c) von jedem der ersten Behälter (34A) aufgebracht ist, die an ersten Lesepositionen (P1) positioniert sind, durch einen Spalt (G2) innerhalb einer Umfangsreihe der Vielzahl zweiter Behälter (34B) und ein zweites Leseziel (P2), das auf einer zweiten Oberfläche (34c) von jedem der zweiten Behälter (34B) aufgebracht ist, die an zweiten Lesepositionen (P2) positioniert sind, optisch zu lesen,
wobei ein erster Winkel (β1) zwischen einer ersten Normallinienrichtung (N1) der ersten Oberfläche (34c) an der ersten Leseposition (P1) und einer radial nach außen weisenden Richtung (RD) in Bezug auf das Drehzentrum (Ax2) so eingestellt ist, dass er sich von einem zweiten Winkel (β2) zwischen einer zweiten Normallinienrichtung (N2) der zweiten Oberfläche (34c) an der zweiten Leseposition (P2) und der radial nach außen weisenden Richtung (RD) unterscheidet,
so dass an den Lesepositionen (P1) und (P2) ein jeweiliger erster Winkel (α1) und ein zweiter Winkel (α2) zwischen der Richtung (B) und den jeweiligen Normallinienrichtungen (N1) und (N2) derart sind, dass ein optisches Lesen der jeweiligen ersten und zweiten Leseziele, die auf die jeweiligen ersten und zweiten Oberflächen (34c) aufgebracht sind, mittels des Lesegeräts (50) möglich ist.

2. Analysator (1) nach Anspruch 1, wobei der zweite Behälter (34B) eine in Richtung des Drehzentrums (Ax2) verjüngte Form hat.

3. Analysator (1) nach einem der Ansprüche 1 oder 2, wobei der zweite Drehträger (33B) die zweiten Behälter (34B) über eine Vielzahl von Haltevorrichtungen (330B), die die einander gleiche Form haben und imstande sind, die zweiten Behälter (34B) zu tragen, in einer sich in Umfangsrichtung erstreckenden tragenden Sektion (S) trägt.

## Revendications

1. Analyseur (1), comprenant :
une pluralité de premiers récipients (34A) et une pluralité de deuxièmes récipients (34B) ;
un premier support rotatif (33A) pouvant tourner autour d'un centre de rotation (Ax2) et supportant la pluralité de premiers récipients (34A) placés de manière annulaire autour du centre de rotation (Ax2) ;
un deuxième support rotatif (33B) pouvant tourner autour du centre de rotation (Ax2) indépendamment du premier support rotatif (33A), et supportant la pluralité de deuxièmes récipients (34B) placés autour du centre de rotation (Ax2) pour entourer les premiers récipients (34A), dans lequel un rayon du premier support rotatif (33A) est plus petit qu'un rayon du deuxième support rotatif (33B) ; et
un lecteur (50) prévu radialement vers l'extérieur des supports rotatifs (33A, 33B) par rapport au centre de rotation (Ax2), configuré pour émettre une ligne d'émission dans une direction donnée (B) différente d'une direction radialement vers l'intérieur par rapport au centre de rotation (Ax2) et lire optiquement une première cible de lecture appliquée à une première surface (34c) de chacun des premiers récipients (34A) positionnés à des premières positions de lecture (P1) à travers un espacement (G2) à l'intérieur d'une rangée circonférentielle de la pluralité de deuxièmes récipients (34B), et une deuxième cible de lecture (P2) appliquée à une deuxième surface (34c) de chacun des deuxièmes récipients (34B) positionnés à des deuxièmes positions de lecture (P2),
dans lequel un premier angle (β1) entre une première direction de ligne normale (N1) de la première surface (34c) à la première position de lecture (P1) et une direction radialement vers l'extérieur (RD) par rapport au centre de rotation (Ax2) est réglé pour être différent d'un deuxième angle (β2) entre une deuxième direction de ligne normale (N2) de la deuxième surface (34c) à la deuxième position de lecture (P2) et la direction radialement vers l'extérieur (RD),
de sorte que, aux positions de lecture (P1) et (P2), un premier angle (α1) et un deuxième angle (α2) respectifs entre la direction (B) et les directions de lignes normales (N1) et (N2) respectives soient tels qu'une lecture optique des première et deuxième cibles de lecture respectives appliquées aux première et deuxième surfaces (34c) respectives par le lecteur (50) soit possible

2. Analyseur (1) selon la revendication 1, dans lequel le deuxième récipient (34B) présente une forme effilée vers le centre de rotation (Ax2).

3. Analyseur (1) selon la revendication 1 ou 2, dans lequel le deuxième support rotatif (33B) supporte les deuxièmes récipients (34B) par l'intermédiaire d'une pluralité de porteurs (330B) présentant la même forme les uns que les autres et capables de supporter les deuxièmes récipients (34B), dans une section de support (S) s'étendant circonférentiellement.
